# EUROPÄISCHE PATENTSCHRIFT

(11) **EP 2 454 451 B1**
(45) Veröffentlichungstag und Bekanntmachung des Hinweises auf die Patenterteilung: **20.07.2016**
(21) Anmeldenummer: 10798485.8
(22) Anmeldetag: 11.11.2010
(51) Int. Cl.: F01D 5/22, F01D 5/26

(54) **ROTOR MIT KOPPLUNGSELEMENTEN ZUR MECHANISCHEN KOPPLUNG VON SCHAUFELN**
ROTOR WITH COUPLING ELEMENTS FOR MECHANICALLY COUPLING BLADES
ROTOR AVEC ÉLÉMENTS D'ACCOUPLEMENT POUR ACCOUPLER MÉCANIQUEMENT DES AUBES

(30) Priorität: 13.11.2009 DE 102009052883
(43) Veröffentlichungstag der Anmeldung: 23.05.2012
(73) Patentinhaber: MTU Aero Engines AG, 80995 München (DE)
(72) Erfinder: STIEHLER, Frank, 04924 Bad Liebenwerda (DE); BORUFKA, Hans, Peter, 82319 Starnberg (DE); PROKOPCZUK, Patrick, 80686 München (DE)
(86) Internationale Anmeldenummer: PCT/DE2010/001320
(87) Internationale Veröffentlichungsnummer: WO 2011/057613

(56) Entgegenhaltungen:
- WO-A1-03/014529
- CH-A- 418 360
- DE-A1- 10 256 778
- JP-A- 5 086 803
- JP-A- 61 252 804
- JP-A- 2007 303 440
- JP-U- H0 359 401
- JP-U- 62 052 203
- US-A- 3 986 792

## Beschreibung

Die Erfindung betrifft einen Rotor mit Kopplungselementen zur mechanischen Kopplung von Schaufeln nach dem Oberbegriff des Patentanspruchs 1.

Laufschaufeln von Gasturbinen, insbesondere von Flugzeugtriebwerken, sind zur Schwingungsdämpfung in der Regel innerhalb eines Schaufelkranzes über ihre Deckbänder miteinander verspannt. Hierzu haben die Deckbänder wie in dem Patent DE 40 15 206 C1 der Anmelderin gezeigt häufig eine z-artige Gestalt mit jeweils zwei Kraftübertragungsflächen zur gegenseitigen mechanischen Kopplung. Eine derartige mechanische Kopplung ist zwar sehr effektiv, jedoch sind die Deckbänder im Bereich ihrer Kraftübertragungsflächen einem relativ hohen Verschleiß ausgesetzt.

Darüber hinaus ist es aus der EP 0 511 022 B1 bekannt, die Schaufeln über ein drahtartiges Kopplungselement miteinander zu verspannen, das durch die Schaufelblätter gefübrt ist. Diese Lösung hat jedoch insbesondere den Nachteil, dass sich das drahtartige Kopplungselement im Strömungspfad bzw. Ringraumkanal befindet Ferner ist die entsprechende Vorbereitung der Schaufelblätter und der Austausch des Kopplungselements technisch aufwendig. Insbesondere ist diese Lösung nicht bzw. nur bedingt bei innen gekühlten Schaufeln realisierbar.

Aus der europäischen Patentanmeldung EP 1 944 466 A1 ist es zum Beispiel bekannt, Kopplungselemente in Taschen von gegenüberliegenden Deckbänder anzuordnen. Bei einer Rotation des Rotors werden die Kopplungselemente radial nach außen bewegt und sollen somit eine mechanische Kopplung der Deckbänder bewirken. Fraglich ist jedoch insbesondere, ob sich über die so hergestellte Kopplung eine ausreichende Schwingungsdämpfung erzielen lässt. Ferner sind diese Kopplungselemente nur bei Schaufeln mit entsprechenden Taschen in den Deckbändem einsetzbar.

Die WO 03014529 A1 beschreibt einen Turbinerotor mit zwischen Deckbänder vorgesehenen Verbindungsstiften.

Aufgabe der vorliegenden Erfindung ist es, einen Rotor mit Kopplungselementen zur mechanischen Kopplung von Schaufeln eines Schaufelkranzes, das die vorgenannten Nachteile beseitigt und eine genaue Einstellung von Dämpfungsspalten im Deckbandsbereich erlaubt zu schaffen.

Diese Aufgabe wird gelöst durch einen Rotor mit den Merkmalen des Patentanspruchs 1.

Erfindungsgemäß ist ein Kopplungselement zur mechanischen Kopplung von Schaufeln eines Schaufelkranzes eines Rotors ist zwischen deren Deckbänder positionierbar. Erfindungsgemäß hat es Kraftübertragungsflächen zur Begrenzung bzw. Definition von Dämpfungsspalten zwischen den Deckbändern.

Der erfindungsgemäße Rotor mit den Kopplungselementen ermöglicht es, dass sich die Deckbänder nicht unmittelbar in Anlage miteinander befinden, sich dennoch aber sicher miteinander verspannen lassen. Die Deckbänder an sich sind quasi voneinander beabstandet, so dass sie sich nicht gegenseitig beschädigen können. Das Kopplungselement kann als kostengünstiges Verschleißteil ausgelegt werden, wodurch die Lebensdauer der Deckbänder entsprechend verlänger wird. Es kann zum nachträglichen Verspannen oder zur Reparatur von Schaufelkränzen engesetzt werden, ohne dass aufwendige vorbereitende Maßnahmen an den Schaufeln bzw. deren Deckbändern vorgenommen werden müssen. Entsprechend geeignet ist das Kopplungselement für das Ersatzteil- bzw. Servicegeschäft. Zusätzlich können derartige Kopplungselemente auch zur Spaltnachstellung bzw. zum Nachtwisten verwendet werden. Ferner ist das Kopplungselement bei sämtlichen Spaltgeometrien wie zum Beispiel bei linearen Spalten, Z-artigen Spalten oder bei doppelt Z-artigen Spalten einsetzbar. Dabei kann die Geometrie des Kopplungselements so bestimmt werden, dass Freiheitsgrade beeinflusst und das Betriebsverhalten des jeweiligen Schaufelkranzes individuell eingestellt ist. Das Kopplungselement ermöglicht unter anderem ein direktes Fügen von Schaufeln bei Rotoren in Blisk (Bladed Disk) oder Bling (Bladed Ring)-Ausführung. Das Kopplungselement ist vorzugsweise gewichtsneutral und sein Material kann einfach an die Materialien der Deckbänder angepasst werden.

Erfindungsgemäß sind die Kraftübertragungsflächen endseitig ausgebildet. Hierdurch wird verhindert, dass in die Deckbänder und somit in die Schaufeln ungünstige Torsionsspannungen aufgrund von Geometrieverzerrungen eingeleitet werden. Dabei ist ferner erfindungsgemäß vorgesehen, dass das Kopplungselement zwischen seinen Kraftübertragungsflächen einen materialverjüngten Körperabschnitt aufweist.

Bei einem Ausführungsbeispiel weist das Kopplungselement zumindest mit einem Abschnitt eine Gestalt auf, die einem Verlauf von gegenüberlegenden Deckbandflanken der Deckbänder entspricht. Dabei können die Kraftübertragungsflächen je nach der Geometrie in eine gemeinsame Richtung zeigen oder entgegengesetzt zueinander ausgerichtet sein.

Vorteilhafterweise setzt das Kopplungselement im eingesetzten Zustand im Wesentlichen die Ringraumgeometrie des Strömungskanals fort. Diese bewirkt eine Minimierung von Strömungsverlusten zwischen den benachbarten Schaufeln im Deckbandbereich.

Ebenso kann das Kopplungselement im eingebauten Zustand eine im Wesentlichen einheitliche Außenkontur der Deckbänder bilden. Hierdurch wird der aerodynamische Widerstand d.h. insbesondere der Widerstand zwischen einer Außendeckbandkontur und der umgebenden Atmosphäre, reduziert.

Bei einem Ausführungsbeispiel hat das Kopplungselement einen Körperabschnitt zum formschlüssigen Eingriff mit zumindest einem der Deckbänder. Der Formschluss hat den Vorteil, dass zum Einsetzen des Kopplungselements keine zusätzlichen Maschinen wie Schweißgeräte notwendig sind. Ferner kann keine Gefügeumwandlung der Deckbänder bzw. des Kopplungselements wie zum Beispiel beim Schweißen erfolgen.

Das Kopplungselement kann modulartig aus mehreren Einzelbauteilen zusammensetzbar sein. Die modulartige Bauweise ermöglicht die Herstellung einer Vielzahl von Kopplungselementen mit verschiedenen Geometrien aus einer begrenzten Anzahl von Einzelbauteilen.

Ein erfindungsgemäßer Rotor hat zumindest einen Schaufelkranz, der eine Vielzahl von Schaufeln aufweist, die spitzenseitig mit jeweils einem Deckband versehen sind. Er hat ferner Kopplungselemente zum Verspannen des Schaufelkranzes, die erfindungsgemäß über Kraftübertragungsflächen Dämpfungsspalte zwischen den Deckbändern begrenzen.

Zur Vermeidung von Verkeilungen ist vorgesehen, dass die Kopplungselemente zwischen den Kraftübertragungsflächen der Deckbänder jeweils einen Schlitz definieren.

Bei einem Ausführungsbeispiel sind die Kopplungselemente stoffschlüssig mit jeweils einem der Deckbänder verbunden. Der Stoffschluss wird beispielsweise über ein Schweißverfahren wie Elektronenstrahlschweißen oder Laserstrahlschweißen hergestellt. Es kann jedoch auch mittels Metallpulverspritzgießen (MIM-Verfahren bzw. Metal Injection Moulding) an dem jeweiligen Deckband aufgebaut werden. Hierdurch wird eine feste und verlässliche Verbindung zwischen den Kopplungselementen und den Deckbänder erreicht.

Bei einem anderen Ausführungsbeispiel sind die Kopplungselemente formschlüssig zwischen den Deckbändem angeordnet. Dies erlaubt das schnelle Einsetzen der Kopplungselemente sowie den einfachen Austausch eines beschädigten Kopplungselements.

Sonstige vorteilhafte Ausführungsbeispiele sind Gegenstand weiterer Unteransprüche.

Es sei erwähnt, dass die Erfindung nicht auf die Verwendung bei Gasturbinen begrenzt ist, sondern beispielweise auch Dampfturbinen und insbesondere Verdichter mitumfasst sind.

Im Folgenden werden bevorzugte Ausführungsbeispiele der Erfindung anhand schematischer Darstellungen näher erläutert. Es zeigen
Figur 1 einen Blick radial von innen nach außen auf ein erstes erfindungsgemäßen Ausführungsbeispiel,
Figur 2 einen Blick radial von innen nach außen auf ein zweites erfindungsgemäßen Ausführungsbeispiel, und
Figur 3 einen Blick radial von außen nach innen auf das zweite Ausführungsbeispiel.

In den Figuren tragen gleiche konstruktive Elemente die gleichen Bezugsziffern.

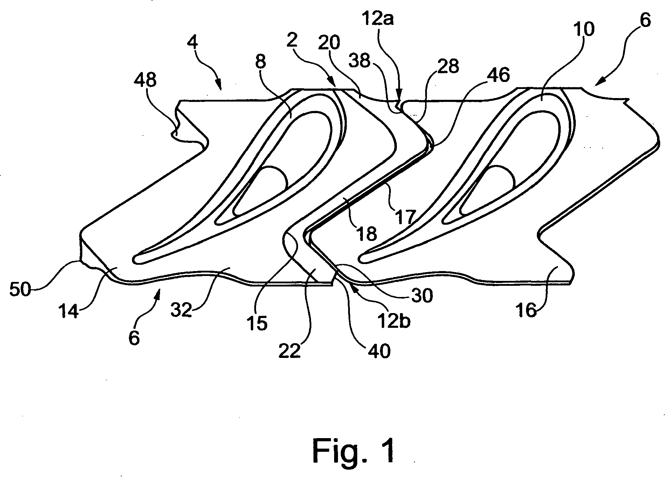

Figur 1 zeigt einen Blick radial von innen nach außen auf ein erstes Kopplungselement 2 eines erfindungsgemäßen Rotors zum gegenseitigen Schwingungsdämpfen von zwei benachbarten Schaufeln 4,6 und zum Verspannen eines von den Schaufeln 4, 6 gebildeten Schaufelkranzes eines nicht gezeigten Rotors. Aus Gründen der Übersichtlichkeit wurden die Schaufeln 4, 6 im Bereich ihrer Schaufelblätter 8, 10 durchbrennt. Die Schaufeln 4,6 sind spitzenseitig mit jeweils einem Deckband 14, 16 versehen, die gegenüberliegende Z-artige Deckbandflanken 15, 17 aufweisen.

Das Kopplungselement 2 besteht aus einer Metallbasis, die auf die Materialien der Deckbänder 14, 16 abgestimmt ist, und hat entsprechend den Deckbandflanken 15, 17 eine Z-artige Gestalt mit einem Steg 18, dessen Endabschnitte 20, 22 in entgegengesetzte Richtungen abgewinkelt sind. Es ist mit seinen Endabschnitten 20, 22 und mit seinem Steg 18 stoffschlüssig mit dem linken Deckband 14 verbunden, insbesondere verschweißt. Vorzugsweise hat es nahezu bzw. die gleiche Wandstärke wie die Deckbänder 14, 16.

Die Endabschnitte 20, 22 bilden jeweils eine dem rechten Deckband 16 zugewandte Kraftübertragungsfläche 28, 30 und begrenzen jeweils einen Dämpfungsspalt 12a, 12b zwischen den Deckbändern 14, 16. Die Dämpfungsspalte 12a, 12b werden insbesondere zwischen den Kraftübertragungsflächen 28, 30 des Kopplungselements 2 und gegenüberliegenden Kraftübertragungsflächen 38, 40 des rechten Deckbandes 16 ausgebildet. Zumindest im Betrieb werden die Dämpfungsspalte 12a, 12b durch ein Auflaufen der gegenüberliegenden Kraftübertragungsflächen 28, 30 bzw. 38,40 geschlossen und somit die Deckbänder 14, 16 bzw. die Schaufeln 4, 6 gegeneinander verspannt.

Aufgrund der Z-artigen Gestalt der Deckbandflanken 15, 17 bzw. des Kopplungselements 2 und der endseitigen Anordnung der Kraftübertragungsflächen 38, 40 des Deckbandes 16 zeigen jeweils die Kraftübertragungsflächen 38, 40 des Deckbandes 16 und somit auch die Kraftübertragungsflächen 28, 30 des Kopplungselements 2 in jeweils ein Richtung.

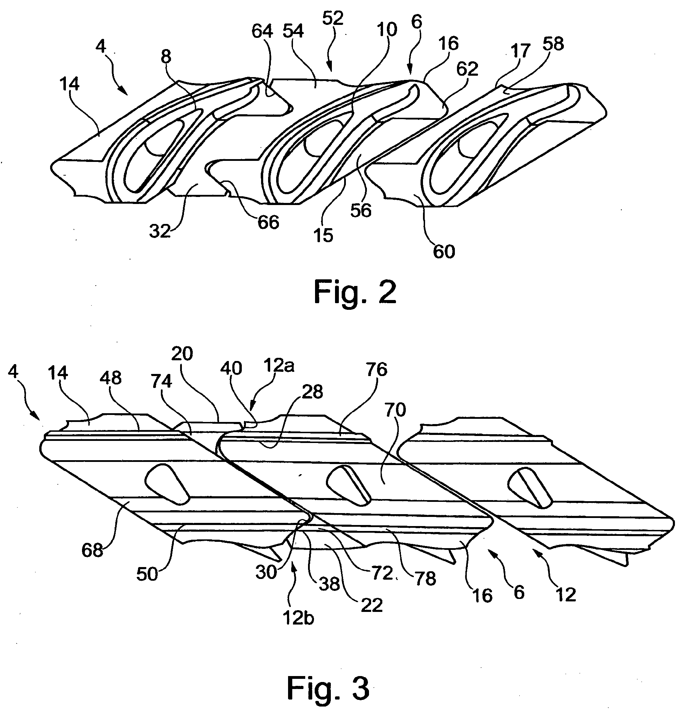

Der Steg 18 ist gegenüber den Endabschnitten 20, 22 materialverjüngt ausgebildet und somit von dem rechten Deckband 16 beabstandet. Hierdurch wird zwischen dem Steg 18 und dem rechten Deckband 16 ein schmaler Schlitz 46 und eine nahezu ebene sich zwischen den Schaufelblättern 8, 10 erstreckende Deckbandinnenfläche 32 gebildet, so dass die Ringraumgeometrie des Strömungskanals über das Kopplungselement 2 fortgeführt wird. Der Steg 18 und die Endabschnitte 20, 22 haben außenumfangsseitig eine in Figur 1 nicht gezeigte außenumfangsseitige Kontur, deren Verlauf an angrenzende Außenumfangsflächen der Deckbänder 14, 16 angepasst ist, so dass im Wesentlichen eine durchgängige Außenkontur gebildet ist (vgl. Figur 3). Demgemäß haben die Endabschnitte 20, 22 jeweils eine wandartige Erhebung, die eine Verbindung zwischen einlassseitigen bzw. auslassseitigen Dichtungsstegen 48, 50 der Deckbänder 14, 16 herstellt und in ihrer Gestalt diesen Dichtungsstegen 48, 50 entspricht.

Figur 2 zeigt einen Blick radial von innen nach außen auf ein zweites Kopplungselement 52 eines erfindungsgemäßen Rotors, das zur Verspannung von spitzenseitigen Deckbändern 14, 16 mit linearen Deckbandflanken 15, 17 von Laufschaufeln 4, 6 verwendet wird.

Das Kopplungselement 52 besteht aus einer Metallbasis, die auf die Materialien der Deckbänder 14, 16 abgestimmt ist, und wird über Formschluss zwischen den Deckbändern 14, 16 gehalten, wobei ein nicht gezeigter Körperabschnitt zur Lagesicherung des Kopplungselements 52 in einer Stillstandposition des Rotors vorgesehen ist. Es hat einen plattenartigen Basiskörper 54, mit dem es in Anlage mit Innenumfangsflächen 56, 58 der Deckbänder 14, 16 bringbar ist, die abwechselnd einlassseitig oder auslassseitig von jeweils einer V-förmigen Materialverdickung 60, 62 begrenzt sind.

Der Basiskörper 54 ist entsprechend der Geometrie des Strömungskanals zwischen den Schaufeln 4,6 bzw. zwischen deren Schaufelblättern 8, 10 leicht bogenförmig ausgebildet und erstreckt sich großflächig zwischen den Schaufelblättern 8, 10, so dass es mit einer von den Innenumfangsflächen 56, 58 der Deckbänder 14,16 abgewandten Oberfläche eine im Wesentlichen ebene Deckbandinnenfläche 32 bildet. Zum Umgreifen der Materialerhebungen 60, 62 weist er zwei entgegengesetzte seitliche V-förmige Ausnehmungen 64, 66 auf.

Der Steg 18 erstreckt sich gemäß der Ansicht in Figur 3 von dem Basiskörper 54 und geht endseitig in zwei dreieckförmige Endabschnitte 20, 22 über, die als Materialverdickungen des Basiskörpers 54 ausgebildet sind. Die Endabschnitte 20, 22 sind entgegengesetzt zueinander ausgerichtet und begrenzen mit ihren Kraftübertragungsflächen 28, 30 jeweils einen Dämpfungsspalt 12a, 12b zwischen den Deckbändern, 14, 16. Die Dämpfungsspalte 12a, 12b werden insbesondere zwischen den Kraftübertragungsflächen 28,30 des Kopplungselements 52 und der jeweils gegenüberliegenden Kraftübertragungsfläche 38 des linken Deckbandes 14 bzw. der Kraftübertragungsfläche 40 des rechten Deckbandes 16 gebildet. Zumindest im Betrieb werden die Dämpfungsspalte 12a, 12b durch ein Auflaufen der gegenüberliegenden Kraftübertragungsflächen 28, 30 bzw. 38, 40 geschlossen und somit die Deckbänder 14, 16 bzw. die Schaufeln 4, 6 gegeneinander verspannt.

Dabei sind die Kraftübertragungsflächen 38, 40 der Deckbänder 14, 16 und somit die Kraftübertragungsflächen 28, 30 des Kopplungselements 2 jeweils entgegengesetzt zueinander orientiert.

Außenumfangsseitig hat der Steg 18 mit den Endabschnitten 20, 22 eine Kontur, deren Verlauf an angrenzende Außenumfangsflächen 68, 70 der Deckbänder 14, 16 angepasst ist, so dass im Wesentlichen eine durchgängige Außenkontur gebildet ist. Demgemäß haben die Endabschnitte jeweils eine wandartige Erhebung 72, 74, die eine Verbindung zwischen gegenüberliegenden einlassseitigen Dichtungsstegen 48, 76 bzw. auslassseitigen Dichtungsstegen 50, 78 der Deckbänder 14, 16 herstellt und in ihrer Gestalt diesen Dichtungsstegen 48, 50, 76, 78 entspricht.

Offenbart ist ein Kopplungselement 2, 52 zur Anordnung zwischen Deckbänder 14, 16 von benachbarten Laufschaufeln 4, 6, wobei es Kraftübertragungsflächen 28, 30 zur Begrenzung von Dämpfungsspalten 12a, 12b zwischen den Deckbänder 14, 16 aufweist und ein Rotor mit zumindest einem derartigen Kopplungselement 2, 52.

## Patentansprüche

1. Rotor mit zumindest einem Schaufelkranz, der eine Vielzahl von Schaufeln (4, 6) aufweist, die spitzenseitig mit jeweils einem Deckband (14, 16) versehen sind und die über Kopplungselemente (2; 52) miteinander verspannt sind,
**dadurch gekennzeichnet, dass** die Kopplungselemente (2; 52) jeweils zwei endseitig ausgebildete Kraftübertragungsflächen (28, 30) zur Definition von Dämpfungsspalten (12a, 12b) zwischen den Deckbändern (14, 16) und zwischen den Kraftübertragungsflächen (28, 30) einen materialverjüngten Körperabschnitt (18) aufweisen, so dass die Kopplungselemente (2; 52) in einer Ruheposition einen Schlitz (46) zwischen den Kraftübertragungsflächen (38, 40) der Deckbänder (14, 16) definieren.

2. Rotor nach Anspruch 1, wobei die Kopplungselemente (2; 52) zumindest mit einem Abschnitt entsprechend einem Verlauf von gegenüberliegenden Deckbandflanken (15, 17) geformt sind.

3. Rotor nach Anspruch 2, wobei die Kraftübertragungsflächen (28, 30) eines jeweiligen Kopplungselements (2; 52) in eine gemeinsame Richtung zeigen oder entgegengesetzt zueinander ausgebildet sind.

4. Rotor nach einem der vorhergehenden Ansprüche, wobei die Kopplungselemente (2; 52) im eingebauten Zustand eine Ringraumgeometrie des Strömungskanals forstsetzen.

5. Rotor nach einem der vorhergehenden Ansprüche, wobei die Kopplungselemente (2; 52) im eingebauten Zustand eine im Wesentlichen einheitliche Außenkontur der Deckbänder (14, 16) bilden.

6. Rotor nach einem der vorhergehenden Ansprüche, wobei die Kopplungselemente (2; 52) einen Körperabschnitt zum formschlüssigen Eingriff mit zumindest einem der Deckbänder (14, 16) haben.

7. Rotor nach einem der vorhergehenden Ansprüche, wobei die Kopplungselemente (2; 52) modulartig aus einer Vielzahl von einzelnen Elementen zusammensetzbar ist.

8. Rotor nach einem der vorhergehenden Ansprüche, wobei die Kopplungselemente (2) stoffschlüssig mit jeweils einem der Deckbänder (14) verbunden sind.

9. Rotor nach einem der vorhergehenden Ansprüche, wobei die Kopplungselemente (52) formschlüssig zwischen den Deckbändem (14, 16) angeordnet sind.

## Claims

1. A rotor having at least one blade ring which has a variety of blades (4, 6) which are each provided with a cover band (14, 16) at the tip and which are clamped together using coupling elements (2; 52),
**characterised in that** the coupling elements (2; 52) each have two power transmission surfaces (28, 30) designed on the ends for the definition of damping gaps (12a, 12b) between the cover bands (14, 16) and have a material tapered body portion (18) between the power transmission surfaces (28, 30) so that the coupling elements (2; 52) define a slot (46) between the power transmission surfaces (38, 40) on the cover bands (14, 16) when in a resting position.

2. The rotor in accordance with claim 1, whereby the coupling elements (2; 52) are at least shaped with a section according to a route between opposite cover band edges (15, 17).

3. The rotor in accordance with claim 2, whereby the power transmission surfaces (28, 30) of a respective coupling element (2; 52) show in one common direction or are designed opposite to one another.

4. The rotor in accordance with any one of the preceding claims, whereby the coupling elements (2; 52) continue an angular geometry of the flow channel when installed.

5. The rotor in accordance with any one of the preceding claims, whereby the coupling elements (2; 52) form an essentially uniform outer contour of the cover bands (14, 16) when installed.

6. The rotor in accordance with any one of the preceding claims, whereby the coupling elements (2; 52) have a body portion for positively engaging at least one of the cover bands (14, 16).

7. The rotor in accordance with any one of the preceding claims, whereby the coupling elements (2; 52) can be assembled in a modular fashion from a variety of individual elements.

8. The rotor in accordance with any one of the preceding claims, whereby the coupling elements (2) are each materially bonded with one of the cover bands (14).

9. The rotor in accordance with any one of the preceding claims, whereby the coupling elements (52) are positively arranged between the cover bands (14, 16),

## Revendications

1. Rotor comprenant au moins une couronne à aubes comportant une pluralité d'aubes (4, 6) respectivement pourvues d'une bande couvrante (14, 16) côté pointe et solidarisées entre elles par des éléments d'accouplement (2 ; 52),
**caractérisé en ce que** les éléments d'accouplement (2 ; 52) comportent respectivement deux surfaces de transmission de force (28, 30) formées côté extrémité, lesquelles sont destinées à définir des fentes d'amortissement (12a, 12b) entre les bandes couvrantes (14, 16), ainsi qu'une section de corps effilée (18) entre les surfaces de transmission de force (28, 30), de sorte que dans une position de repos, les éléments d'accouplement (2 ; 52) définissent une fente (46) entre les surfaces de transmission de force (28, 30) des bandes couvrantes (14, 16).

2. Rotor selon la revendication 1, dans lequel les éléments d'accouplement (2 ; 52) sont formés de façon à correspondre, au moins au niveau d'une section, à un parcours de bords de bande couvrante opposés (15, 17).

3. Rotor selon la revendication 2, dans lequel les surfaces de transmission de force (28, 30) d'un élément d'accouplement (2 ; 52) respectif s'étendent dans une direction commune ou formées de façon à se détourner l'une de l'autre.

4. Rotor selon l'une des revendications précédentes, dans lequel, à l'état monté, les éléments d'accouplement (2 ; 52) poursuivent une géométrie d'espace annulaire du canal d'écoulement.

5. Rotor selon l'une des revendications précédentes, dans lequel, à l'état monté, les éléments d'accouplement (2 ; 52) forment un contour extérieur quasiment uniforme des bandes couvrantes (14, 16).

6. Rotor selon l'une des revendications précédentes, dans lequel les éléments d'accouplement (2 ; 52) présentent une section de corps destinée à venir en prise par complémentarité de forme avec au moins l'une des bandes couvrantes (14, 16).

7. Rotor selon l'une des revendications précédentes, dans lequel les éléments d'accouplement (2 ; 52) peuvent être assemblés de façon modulaire à partir d'une pluralité d'éléments individuels.

8. Rotor selon l'une des revendications précédentes, dans lequel les éléments d'accouplement (2) sont respectivement reliés par adhérence de matière à l'une des bandes couvrantes (14).

9. Rotor selon l'une des revendications précédentes, dans lequel les éléments d'accouplement (52) sont montés par complémentarité de forme entre les bandes couvrantes (14, 16).
